# EUROPEAN PATENT SPECIFICATION

(11) **EP 1 100 208 B1**
(45) Date of publication and mention of the grant of the patent: **23.02.2011**
(21) Application number: 99203724.2
(22) Date of filing: 08.11.1999
(51) Int. Cl.: H04B 1/16

(54) **Receiver with multipath interference dependent mono-stereo detector**
Empfänger mit auf Mehrwegstörungen abhängigen Mono-Stereo-Detektor
Récepteur radio un demodulateur monofonique-stérepphonique dépendant de bruit à voies multiples

(43) Date of publication of application: 16.05.2001
(73) Proprietor: Continental Automotive GmbH, 30165 Hannover (DE)
(72) Inventor: Ahn, Roger Herman Mathieu, 5600 JB Eindhoven (NL)

(56) References cited:
- EP-A- 0 565 255
- DE-A- 19 540 183
- US-A- 5 771 293

## Description

The invention relates to a method to provide a mono stereo control using a receiver comprising a multipath detector providing signal pulses at the occurrence of multipath interferences in a reception signal as well as stereo signal processing means being supplied with a mono-stereo control signal varying between first and second signal levels for a transition of the stereo signal processing means between respectively a stereo and a mono mode.

A receiver of this type is applied in e.g. VDO radio-cassette recorder RC 578. In this known receiver, the attack time constant of the mono-stereo control signal determining the time of transition from the first to the second level, i.e. from the stereo mode, in which the stereo signal processing means effectuates full stereo sound reproduction, into the mono mode, in which the stereo signal processing means effectuates full mono sound reproduction - hereinafter also referred to as attack transition - is chosen to be relatively small. This causes the mono-stereo control signal to follow closely the attack transitions of the signal pulses of the multipath detector. These signal pulses not only determine the mono-stereo control signal in its attack time, but also in its momentary level as well as its DC level. The more frequent multipath interferences occur, the higher the repetition frequency of the signal pulses and the closer the DC level of the control signal will approach the second signal level, at which the stereo signal processing means effectuate a full mono sound reproduction. The recovery time constant of the mono-stereo control signal determining the time of transition from the second to the first signal level, this transition also referred to as recovery transition, is chosen substantially greater than the attack time constant. This causes the recovery transition time to increase the closer the DC level of the control signal approaches the second signal level. In this known receiver also multipath interference occurring at relatively low repetition frequencies will effectuate an increase in said recovery transition time.

Examples of stereo radio receivers are disclosed in DE 195 40 183 and US 5 771 293.

It is an object of the invention to provide a mono stereo control allowing to combine fast attack and slow recovery transitions, without said multipath interference occurring at relatively low repetition frequencies affecting the recovery transition time.

It is another object of the invention to provide a simple and reliable implementation of a mono stereo control device for use in a FM stereo radio receiver.

An object of the invention is to provide a receiver according to claim 1.

By applying this measure according to the invention, the mono stereo control varies the mono-stereo set point in accordance with either the first or the second mono-stereo control signal component, dependent which of these signals causes the audio reproduction to be set closest to mono reproduction. By chosing a practical value for the predetermined threshold value, which is to be defined in field tests, the effect of the signal pulses on the avaragely varying control signal can be set properly, i.e. such that an optimal compromise between stereo reproduction on the one hand and audible interferences on the other hand is obtained.

A preferable embodiment of the receiver according to the invention is characterized in that the timing circuit comprises a counter circuit for generating said second mono-stereo control signal component being reset to said second signal level when the timing circuit output signal increases above said predetermined threshold value and being set to increase with time when said second mono-stereo control signal component decreases below said predetermined threshold value.

Preferably the receiver is dimensioned to cause the second mono-stereo control signal component to increase from said second signal level to a maximum level corresponding to said first signal level during a transition time within a range between substantially 1 to 30 seconds. value is chosen at an amplitude level of substantially 30% of the maximum amplitude variation range between said stereo and mono level occurring at said second input of the control signal generating means.

The predetermined averaging interval is preferably chosen at a value substantially within a range between substantially 0,5 to 2 seconds.

The above and other objects, features and advantages of the present invention will become more apparent from the following description referring to the accompanying drawings, in which a preferred embodiment of the present invention is shown by way of illustrative example and in which identical reference indications are used for corresponding circuitry.
Figure 1 a preferred embodiment of a receiver according to the invention;
Figure 2a-e signal plots showing the variation in time of the mono-stereo transition in the receiver of Figure 1 at the occurrence of multipath interferences.

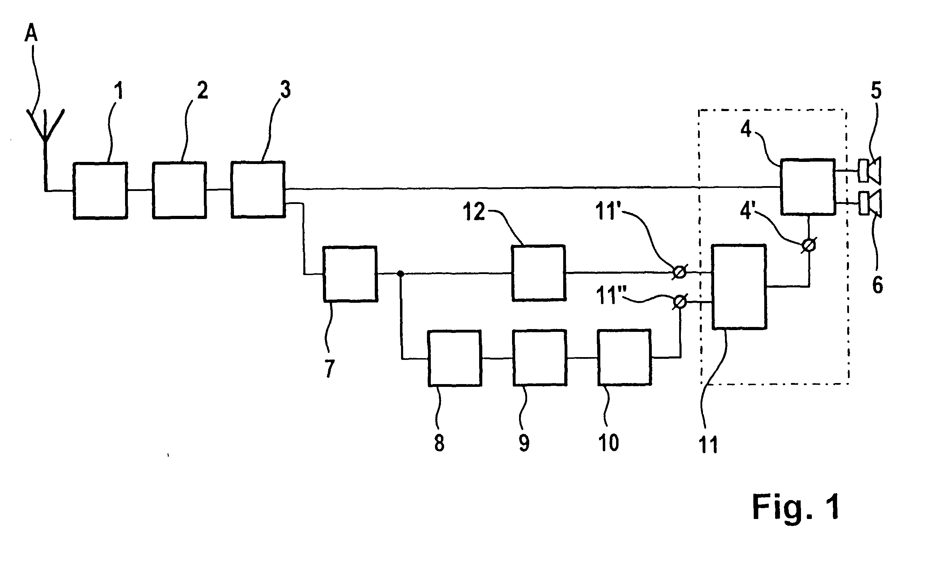

Figure 1 shows a receiver according to the invention comprising an FM-RF tuner front end 1 for selecting a wanted FM-RF signal from an FM-RF broadband signal received from antenna means A and for converting the same into an IF signal. The IF signal is supplied to an IF circuit 2 for an IF selection of the wanted FM signal and subsequently supplied to FM detecting means 3 for a detection of the baseband FM modulation signal, hereinafter also referred to as stereo-multiplex signal MPX. The stereo-multiplex signal MPX is supplied to a stereo-decoder 4 for demultiplexing or dematrixing said stereo-multiplex signal MPX into baseband stereo right and stereo left signals R and L respectively. The stereo-decoder 4 is coupled to sound reproducing means 5 and 6 for acoustical reproduction of said baseband stereo right and stereo left signals R and L.

The stereo-decoder 4 is provided with a control terminal 4' for supplying thereto a mono-stereo control signal for a gradual transition between a stereo mode and a mono mode, i.e. between maximum stereo channel separation resulting in full stereo reproduction and zero stereo channel separation, resulting a summation (L+R) of the stereo right and stereo left signals R and L, effecting full mono sound reproduction.

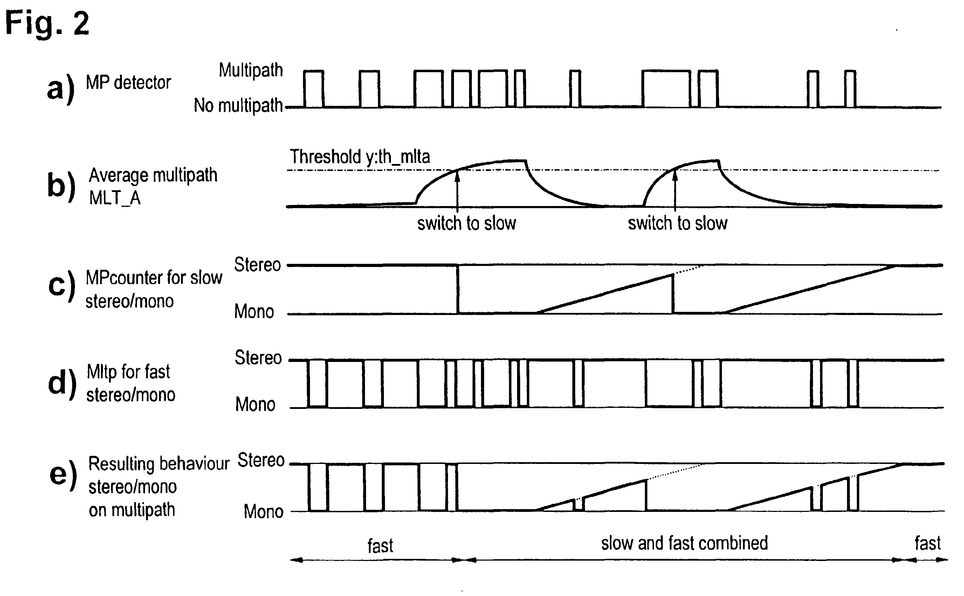

An output of the FM detecting means 3 is coupled to a multipath detector 7 for detecting multipath interferences occurring in the stereo-multiplex signal MPX. The multipath detector 7 is coupled to a first input 11' of control signal generating means 4, 11. The control signal generating means 4, 11 comprises an OR gate 11 as well as said stereo-decoder 4, the OR gate 11 having a first input in common with the first input 11', and an output, which is coupled to said control terminal 4'. The multipath detector 7 provides signal pulses at the occurrence of multipath interferences in the stereo-multiplex signal MPX, i.e. in the reception signal. These signal pulses are supplied to a pulse shape circuit 12 having relatively short attack and release time constants forming a first mono stereo control signal component. This first mono stereo control signal component is supplied via the first input 11" of said OR gate 11 to the control terminal 4' of the stereo-decoder 4. The signal pulses of the first mono stereo control signal component are varying between first and second signal levels, hereinafter also referred to as stereo and mono levels, and cause the sound reproduction to respectively vary from the stereo mode to the mono mode at their occurrence. The circuits described sofar are on itself known, e.g. from VDO's car radio receiver RC 578. According to the invention, the signal pulses at the output of the multipath detector 7 are also being supplied to signal averaging means 8 for averaging said multipath interferences over a predetermined averaging interval. An output of the signal averaging means 8 is being coupled to a threshold circuit 9 followed by a timing circuit 10 generating a second mono stereo control signal component. An output of the timing circuit 10 is coupled to a second input 11" of the control signal generating means 4, 11. The functionality and operation of the signal averaging means 8, the threshold circuit 9 and the timing circuit 10 will be explained with reference to Figures 2a-e.

Figure 2a shows the variation in time of the signal pulse amplitude (a) at the output of the multipath detector 7 when detecting multipath interferences in the stereo-multiplex signal MPX. In a practical embodiment, the multipath detector 7 is dimensioned such that for signals having an amplitude modulation (AM) depth of more than 40% sound reproduction occurs in mono mode, for signals decreasing in amplitude modulation gradually from 40% to 10% sound reproduction is in gradual transition between a mono and stereo mode and for signals, and for signals decreasing in amplitude modulation below 10% sound reproduction is in stereo mode. The so obtained signal pulses vary between a 10% AM or stereo level occurring when there is no multipath interference, and a 40% AM or mono level, occurring at the detection of multipath. These signal pulses are being supplied to the pulse shape circuit 12 being coupled to the first input 11' of the control signal generating means 4, 11 as well as to the signal averaging means 8.

Figure 2b shows the variation in time of the output signal (b) of the signal averaging means 8, reflecting the variation of the signal pulse energy averaged over a certain predetermined time window. The signal averaging means 8 may comprise an integrating circuit having a charging and discharging time constants respectively determining the slope in the increase and decrease of its output signal. The signal pulse energy within this time window is determined by the pulse rate and the pulse width. The higher the pulse rate the faster the increase in the output signal level of the signal averaging means, this increase being stronger the greater the pulse width. In a practical embodiment, the signal averaging means 8 is dimensioned to provide for a default value of both charging or attack time constant and discharging or release time constant of 1500 ms.

The output signal level of the signal averaging means 8 is compared in the threshold circuit 9 with a predetermined threshold value Vth. In said practical embodiment the threshold value Vth is chosen to correspond to 30% of the level occurring at maximum average multipath level.

Figure 2c shows the variation in time of the output signal (c) of the timing circuit 10, also referred to as second mono stereo control signal component. When the signal (b) is below the threshold value Vth, signal (c) in default presents a first level, at which sound reproduction is set to stereo mode. When the signal (b) exceeds the threshold value Vth then, upon crossing this value Vth, signal (c) is varying with a short attack time constant to a second level, at which sound reproduction is set to mono mode. As long as signal (b) is in excess of the threshold value Vth, signal (c) remains at said first level. As soon as signal (b) decreases below said threshold value Vth, then upon signal (b) crossing this value Vth, signal (c) is varying with a relatively long recovery time constant to the said first level. In said practical embodiment a default value for this recovery time constant chosen at 13500 msec., however values may be chosen within a range between 1 to 30 seconds. The timing circuit may preferably be implemented using a counter circuit.

Figure 2d shows the variation in time of the output signal (d) of the pulse shape circuit 12. In said practical embodiment the pulse shape circuit 12 provides for attack and recovery time constants of respectively 5 msec and 30 msec.

Figure 2e shows the variation in time of the output signal (e) of the OR gate 11 between said first and second levels. This signal (e) is used to control the mono-stereo mode transition in sound reproduction. The threshold circuit 10 avoids the short incidental occurring multipath interferences from affecting the slow mono to stereo transition caused by the average multipath level.

The invention is not limited to the preferred embodiment described above. The skilled man may easily find other values for the various parameters mentioned to apply the invention or even, with a proper dimensioning, dispense with certain circuitry shown in the above example, without departing from the gist of the invention. For example, when dimensioning the preceding multipath detector 7 properly, the pulse shape circuit 12 can be dispensed with. Furthermore said signal averaging means may well replaced by a pulse rate detector.

## Claims

1. Receiver comprising
- a tuner front end (1) for selecting a RF signal and for providing an IF signal,
- IF selection means (2) for an IF selection of a FM signal, the IF selection means being coupled to an output of the tuner front end (1),
- FM detecting means (3) for detection of a baseband FM modulation signal, the FM detection means (3) being coupled to an output of the IF selection means (2),
- a stereo-decoder (4) for demultiplexing or dematrixing the baseband FM modulation signal supplied by the FM detection means (3) into two baseband stereo singals (R, L),
- control terminal means (4') for supplying a mono-stereo control signal for a gradual transition between a stereo mode and a mono mode to the stereo decoder (4),
- a multipath detector (7), coupled to an output of the FM detection means (3), for detecting multipath interferences and for providing signal pulses at the occurrence of multipath interferences,
the receiver being **characterised by** further comprising:
- signal averaged means (8), coupled to an output of the multipath detector (7), for averaging the output signal of the multipath detector (7) over a predetermined averaging interval,
- threshold circuit means (9), coupled to an output of the signal averaging means (8), for comparing the output signal of the signal averaging means (8) to a threshold value,
- timing circuit means (10), coupled to the threshold circuit means (9), for providing an increasing or decreasing output signal in case the averaged output signal of the threshold circuit means (9) falls below the threshold value,
- or-gate means (11) having a first input (11') coupled to the multipath detector (7) and a second input (11") coupled to the timing circuit means (10) and an output coupled to the control terminal means (4').

2. Receiver according to claim 1, **characterised in that** the first input (11') of the or-gate means (11) is coupled to the multipath detector (7) via a pulse shape circuit (12).

3. Receiver according to claim 1 or 2, **characterized in that** the timing circuit means (10) comprises a counter circuit.

## Patentansprüche

1. Empfänger umfassend:
- eine Tuner-Vorstufe (1) zum Auswählen eines HF-Signals und zum Bereitstellen eines ZF-Signals,
- ZF-Wählmittel (2) für eine 2F-Auswahl eines FM-Signals, wobei das ZF-Wählmittel an einen Ausgang der Tuner-Vorstufe (1) angekoppelt ist,
- FM-Erkennungsmittel (3) zum Erkennen eines Basisband-FM-Modulationssignals, wobei das FM-Erkennungsmittel (3) an einen Ausgang des ZF-Wählmittels (2) angekoppelt ist,
- einen Stereo-Decodierer (4) zum Demultiplexieren bzw. Entmatrizieren des durch das FM-Erkennungsmittel (3) zugeführten Basisband-FM-Modulationssignals in zwei Basisband-Stereosignale (R, L),
- Steueranschlussmittel (4') zum Zuführen eines Mono-Stereo-Steuersignals für einen allmählichen Übergang zwischen einem Stereobetrieb und einem Monobetrieb zu dem Stereodecodierer (4),
- einen an einen Ausgang des FM-Erkennungsmittels (3) angekoppelten Mehrwegedetektor (7) zum Erkennen von Mehrwegestörungen und zum Bereitstellen von Signalimpulsen beim Auftreten von Mehrwegestörungen,
wobei der Empfänger **gekennzeichnet** ist als weiterhin umfassend:
- ein an einen Ausgang des Mehrwegedetektors (7) angekoppeltes Signalmittelungsmittel (8) zur Mittelung des Ausgangssignals des Mehrwegedetektors (7) über einen vorbestimmten Mittelungszeitabschnitt,
- ein an einen Ausgang des Signalmittelungsmittels (8) angekoppeltes Schwellwertschaltungsmittel (9) zum Vergleichen des Ausgangssignals des Signalmittelungsmittels (8) mit einem Schwellwert,
- ein an das Schwellwertschaltungsmittel (9) angekoppeltes Zeitschaltungsmittel (10) zum Bereitstellen eines zunehmenden oder abnehmenden Ausgangssignals, sollte das gemittelte Ausgangssignal des Schwellwertschaltungsmittels (9) unter den Schwellwert abfallen,
- Oder-Gatter-Mittel (11) mit einem an den Mehrwegedetektor (7) angekoppelten ersten Eingang (11') und einem an das Zeitschaltungsmittel (10) angekoppelten zweiten Eingang (11'') und einem an das Steueranschlussmittel (4') angekoppelten Ausgang.

2. Empfänger nach Anspruch 1, **dadurch gekennzeichnet, dass** der erste Eingang (11') des Oder-Gatter-Mittels (11) über eine Impulsformschaltung (12) an den Mehrwegedetektor (7) angekoppelt ist.

3. Empfänger nach Anspruch 1 oder 2, **dadurch gekennzeichnet, dass** das Zeitschaltungsmittel (10) eine Zählerschaltung umfasst.

## Revendications

1. Récepteur comprenant
- un étage d'entrée de syntoniseur (1) pour sélectionner un signal RF et pour fournir un signal IF,
- un moyen de sélection IF (2) pour une sélection IF d'un signal FM, le moyen de sélection IF étant couplé à une sortie de l'étage d'entrée de syntoniseur (1),
- un moyen de détection FM (3) pour la détection d'un signal de modulation FM de bande de base, le moyen de détection FM (3) étant couplé à une sortie du moyen de sélection IF (2),
- un décodeur stéréo (4) pour le démultiplexage ou le dématriçage du signal de modulation FM de bande de base fourni par le moyen de détection FM (3) en deux signaux stéréo de bande de base (R, L),
- un moyen formant terminal de commande (4') pour fournir au décodeur stéréo (4) un signal de commande mono-stéréo pour un passage progressif d'un mode stéréo à un mode mono,
- un détecteur multitrajets (7), couplé à une sortie du moyen de détection FM (3), pour détecter les interférences multitrajets et pour délivrer des impulsions de signaux lors de la survenue d'interférences multitrajets,
le récepteur étant **caractérisé en ce qu'**il comprend, en outre,
- un moyen de calcul de moyenne de signal (8), couplé à une sortie du détecteur multitrajets (7), pour calculer la moyenne du signal de sortie du détecteur multitrajets (7) sur un intervalle de calcul de moyenne prédéterminé,
- un moyen formant circuit de seuil (9), couplé à une sortie du moyen de calcul de moyenne de signal (8), pour comparer le signal de sortie du moyen de calcul de moyenne de signal (8) à une valeur seuil,
- un moyen formant circuit de synchronisation (10), couplé au moyen formant circuit de seuil (9), pour fournir un signal de sortie croissant ou décroissant dans le cas où le signal de sortie moyenne du moyen formant circuit de seuil (9) tombe en dessous de la valeur seuil,
- un moyen formant porte OU (11) comprenant une première entrée (11') couplée au détecteur multitrajets (7) et une seconde entrée (11" ) couplée au moyen formant circuit de synchronisation (10) et une sortie couplée au moyen formant terminal de commande (4').

2. Récepteur selon la revendication 1, **caractérisé en ce que** la première entrée (11') du moyen formant porte OU (11) est couplée au détecteur multitrajets (7) par le biais d'un circuit de mise en forme d'impulsions (12).

3. Récepteur selon la revendication 1 ou 2, **caractérisé en ce que** le moyen formant circuit de synchronisation (10) comprend un circuit compteur.
